# EUROPEAN PATENT SPECIFICATION

(11) **EP 0 911 717 B1**
(45) Date of publication and mention of the grant of the patent: **19.03.2003**
(21) Application number: 98307686.0
(22) Date of filing: 22.09.1998
(51) Int. Cl.: G06F 1/16, G06F 1/18

(54) **Flexible portable computer**
Flexibler tragbarer Rechner
Ordinateur portable flexible

(30) Priority: 24.10.1997 US 957683
(43) Date of publication of application: 28.04.1999
(73) Proprietor: Hewlett-Packard Company, A Delaware Corporation, Palo Alto, CA 94304 (US)
(72) Inventor: Helot, Jaques H., Corvallis, Or 97333 (US)
(74) Representative: Carpmaels & Ransford

(56) References cited:
- EP-A- 0 683 026
- US-A- 4 096 577
- US-A- 5 002 184
- US-A- 5 305 181
- US-A- 5 568 357
- "INFLATABLE INTERNAL COMPUTER STRUCTURE" IBM TECHNICAL DISCLOSURE BULLETIN, vol. 39, no. 1, 1 January 1996, pages 309-312, XP000556414

## Description

### TECHNICAL FIELD

This invention relates to portable computers, such as laptop computers.

### BACKGROUND OF THE INVENTION

Portable computers are widely enjoyed primarily because of their most obvious characteristic: portability. Users can tote portable computers on business or leisure travel, carrying them on subways, planes, trains, and automobiles.

Due to their portability, portable computers are designed to withstand structural punishment. Portable computers are expected to withstand jolts and bumps, even to the point of handling a free fall to the floor. Conventional portable computers employ rigid metal or plastic housings. Such portables are often incapable of sustaining much structural punishment without permanent damage to the housing, such as cracking, bending, or denting.

Somewhat unfavorable to the goal of strong portable computers is a trend to make portable computers thinner and lighter to further improve their portability. These improvements come at a cost of less structural integrity because the housing walls are made thinner and it is increasingly difficult to add appropriate stiffeners to the walls. This trend does not bode well for improving the crash-resistance of the computer.

Accordingly, there is a desire to improve the structural design of portable computers without significantly adding weight or increasing thickness.

### SUMMARY OF THE INVENTION

This invention pertains to a portable computer that has a special housing made of a flexible material, such as an elastomer. The flexible housing enables the computer to bend without permanent deformation. The flexibility of the case makes the feel of the portable computer more soft and comfortable. The feel is akin to a binder, an object that people carry frequently around.

The portable computer comprises an input device, an output device and a processing unit coupled to the input device and the output device. At least one additional electronic component is connected to the processing unit, the additional electronic component being a battery, a memory drive or a modem. A rigid tray supports the additional electronic component to form a rigid module. A housing supports the input device, the output device, the processing unit and the rigid module, the housing having a base member that holds at least the processing unit and the rigid module. The base member is formed of a flexible material that enables the base member of the housing, when assembled to support the processing unit and the rigid module, to bend without permanent deformation.

The housing may be made from an elastomer. It possesses an elastic quality that permits stress or bendability of the computer without permanent disconfiguration. Moreover, the housing is lightweight and can be made sufficiently thin to achieve the strict thickness requirements for portable computers. The flexibility of the housing also improves shock-resistance. Part of the energy is absorbed by the flexible, elastomer case. With a rigid housing, in contrast, the shock is detrimentally transferred to the more fragile internal components.

### BRIEF DESCRIPTION OF THE DRAWINGS

Fig. 1 is a perspective view of a portable computer.

Fig. 2 is an exploded view of a computer portion of the Fig. 1 portable computer.

Fig. 3 is an assembled view of the Fig. 2 computer portion.

The same numbers are used through the drawings to reference like features and components.

### DETAILED DESCRIPTION

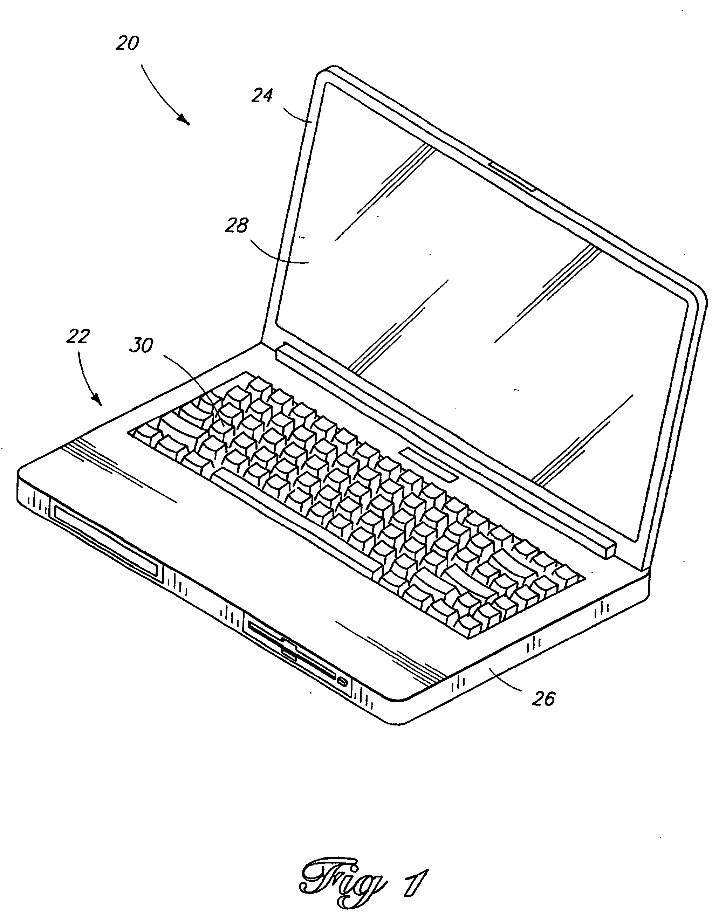

Fig. 1 shows a portable computer 20, embodied in the form of a laptop computer. The portable computer 20 has an external housing 22 with a lid 24 and a base 26 connected together via a hinge or other flexible joint to permit the lid to fold down atop the base. A flat panel display 28 is mounted within the lid 24 and a keyboard 30 is mounted within the base 26. Although the portable computer 20 is shown as a laptop computer, aspects of this invention may be used in other embodiments of a portable computer, such as a handheld computer, a notebook computer, and a sub-notebook computer.

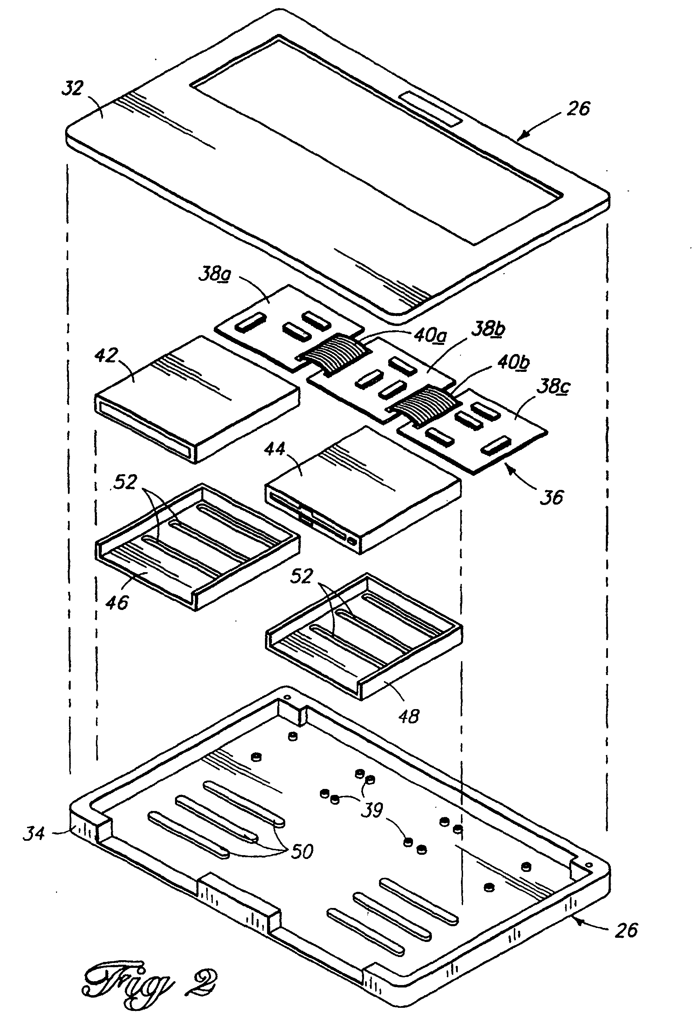

Fig. 2 shows the computer/base portion of the portable laptop computer 20 in a disassembled, exploded state. The display/lid portion is not illustrated in this figure. The housing base 26 includes a top member 32 and a bottom member 34. The top member 32 has an opening formed therein to accommodate the keyboard (not shown).

According to an aspect of this invention, the base 26 (including the top and bottom members) is formed of a flexible material that enables it to bend without permanent deformation. Preferably, the flexible material is an elastomer (e.g., natural rubber or synthetically produced rubber) that possesses an elastic quality that permits stress or bendability without permanent disconfiguration. In this preferred embodiment, lid 24 (Fig. 1) is also formed of a flexible material that enables it to bend without permanent deformation. Like base 26, lid 24 is also preferably an elastomer (e.g. natural rubber or synthetically provided rubber). An alternate embodiment has been contemplated where lid 24 is a rigid material.

The base 26 houses a processing component 36, which includes a central processing unit, RAM (random access memory), ROM (read only memory), timing circuitry, bussing, and other devices or circuitry that are common in implementing a computer. In Fig. 2, the processing component 36 is implemented as multiple printed circuit boards (PCBs) 38(a), 38(b), and 38(c) that are electronically joined together by flex circuits 40(a) and 40(b). This construction enables movement among the PCBs relative to one another. The processing component 36 is fastened to the bottom member 34 by screwing the PCBs to elevated mounts 39. An alternate embodiment has been contemplated where processing component 36 is located in lid 24 instead of base 26. In this embodiment, elevated mounts 39 are located in lid 24 instead of base 26.

In the illustrated implementation, the base 26 further houses two additional electronic components 42 and 44. The electronic components 42 and 44 are representative of many different computer components, and are electronically coupled to the processing component 36 via conductors or busses (not shown). Examples of possible electronic components include a battery, a memory drive (e.g., hard disk drive, floppy disk drive, CD ROM drive, PC card drive, etc.), and a modem.

The electronic components 42 and 44 are supported in respective trays 46 and 48. The trays 46 and 48 are formed of a rigid, hard material, such as plastic or metal. The trays provide structural protection to the electronic components 42 and 44. Together, the components and trays form rigid modules that are inserted into the flexible base 26.

The trays 46 and 48 and bottom member 34 have complementary orientation guides so that the trays are oriented correctly when assembled in the base. In Fig. 2, the orientation guides are implemented as corresponding pairs of ribs 50 and slots 52. Multiple ribs 50 are formed in the bottom member 34 and associated elongated apertures are formed in trays 46 and 48. When assembled, the tray slots 52 align over and settle onto the ribs 50, thereby preventing the rigid modules from rotating or moving within the base.

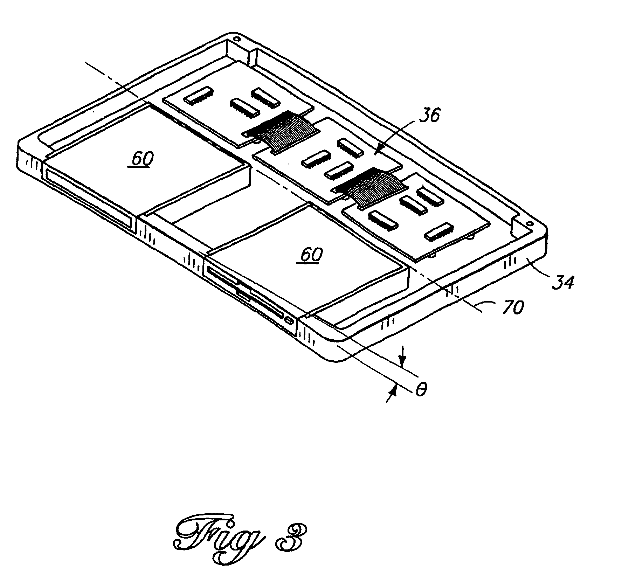

Fig. 3 shows the computer base portion of the laptop computer 20 in an assembled state, with the top member 32 of the base 26 omitted for purposes of viewing the internal component arrangement. The rigid modules, which are referenced here generally as number 60, are mounted in the flexible bottom member 34. The processing component 36 is attached to the bottom member 34 in a juxtaposed side-by-side arrangement with the rigid modules 60.

When assembled, laptop computer 20 is flexible and bendable without causing permanent structural damage. The rigid modules 60 move independently of one another and independently of the processing component 36. Additionally, the PCBs 38(a)-38(c) of the processing component move independently of one another. The elastomer base holds the independent rigid modules 60 and PCBs 38(a)-38(c) together, while permitting a wide range of flexibility.

As an example, the computer base portion can be flexibly deflected through an angle of deflection θ greater than five degrees without stress or retentive disconfiguration. The angle of deflection θ is measured from a horizontal plane upon which the computer rests to a point that one end can be flexed while the other end remains on the horizontal plane. This angle of deflection is shown in Fig. 3. Moreover, the computer base portion can withstand torque and twisting about a longitudinal axis 70. The flexibility of the case and the elastomer material makes the feel of the portable computer more soft and comfortable. The feel is akin to a binder, an object with which people are familiar and often carry around.

Because of this construction, the portable computer can flex more than a conventional computer made of a rigid material, such as stiff plastic or metal. With a conventional construction, flex is limited to about three degrees or less.

The elastomeric base 26 is advantageous over prior art plastic or metal bases. Unlike plastic bases that may fracture or break when jolted and unlike metal bases that may dent, permanently bend, or crack when bumped, the flexible base 26 can withstand jolting, bumping, or dropping without permanent disformation. Additionally, the elastomer base is lightweight and can be made thin to achieve the strict thickness requirements for portable computers.

The flexibility of the housing also improves shock-resistance. Part of the energy is absorbed by the flexible, elastomer case, thereby lessening the shock that is transferred through to the more fragile internal components. In contrast, with a rigid housing, the magnitude of the shock gets transferred more directly to the more fragile internal components, which may cause damage.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A portable computer comprising:
an input device (30);
an output device (24);
a processing unit (36) coupled to the input device (30) and the output device (24);
at least one additional electronic component (42, 44) connected to the processing unit, the additional electronic component being a battery, a memory drive or a modem;
a rigid tray (46, 48) supporting the additional electronic component (42, 44) to form a rigid module; and
a housing (22) supporting the input device, the output device, the processing unit and the rigid module, the housing (22) having a base member (26) that holds at least the processing unit and the rigid module;
the base member (22) being formed of a flexible material that enables the base member of the housing, when assembled to support the processing unit and the rigid module, to bend without permanent deformation.

2. A portable computer as recited in claim 1, wherein the base member (22) is formed of an elastomer material.

3. A portable computer as recited in claim 1 or claim 2, wherein the portable computer is configured as a laptop computer with the input device being a keyboard and the output device being a display.

4. A portable computer as recited in any preceding claim, wherein the processing unit (36) comprises multiple printed circuit boards (38) electronically joined together by one or more flex circuits (40).

5. A portable computer as recited in any preceding claim, wherein the base member (26), when assembled to support the processing unit (36), can be flexibly deflected through an angle of deflection greater than five degrees without permanent deformation.

## Patentansprüche

1. Ein tragbarer Computer mit folgenden Merkmalen:
einer Eingabevorrichtung (30);
einer Ausgabevorrichtung (24);
einer Verarbeitungseinheit (36), die mit der Eingabevorrichtung (30) und der Ausgabevorrichtung (24) gekoppelt ist;
zumindest einer zusätzlichen Elektronikkomponente (42, 44), die mit der Verarbeitungseinheit verbunden ist, wobei die zusätzliche Elektronikkomponente eine Batterie, ein Speicherlaufwerk oder ein Modem ist;
einer starren Ablage (46, 48), die die zusätzliche Elektronikkomponente (42, 44) trägt, um ein starres Modul zu bilden; und
einem Gehäuse (22), das die Eingabevorrichtung, die Ausgabevorrichtung, die Verarbeitungseinheit und das starre Modul trägt, wobei das Gehäuse (22) ein Basisbauteil (26) aufweist, das zumindest die Verarbeitungseinheit und das starre Modul hält,
wobei das Basisbauteil (26) aus einem flexiblen Material gebildet ist, das es ermöglicht, daß sich das Basisbauteil des Gehäuses, wenn es zusammengefügt ist, um die Verarbeitungseinheit und das starre Modul zu tragen, ohne eine permanente Verformung biegt.

2. Ein tragbarer Computer gemäß Anspruch 1, bei dem das Basisbauteil (22) aus einem Elastomermaterial gebildet ist.

3. Ein tragbarer Computer gemäß Anspruch 1 oder 2, wobei der tragbare Computer als ein Laptop-Computer konfiguriert ist, wobei die Eingabevorrichtung eine Tastatur und die Ausgabevorrichtung eine Anzeige ist.

4. Ein tragbarer Computer gemäß einem der vorhergehenden Ansprüche, bei dem die Verarbeitungseinheit (36) mehrere gedruckte Schaltungsplatinen (38) aufweist, die durch eine oder mehrere flexible Schaltungen (40) elektrisch miteinander verbunden sind.

5. Ein tragbarer Computer gemäß einem der vorhergehenden Ansprüche, bei dem das Basisbauteil (26), wenn es zusammengefügt ist, um die Verarbeitungseinheit (36) zu tragen, flexibel um einen Ablenkwinkel von mehr als 5 Grad ohne eine permanente Verformung abgelenkt werden kann.

## Revendications

1. Ordinateur portable comprenant :
un dispositif d'entrée (30) ;
un dispositif de sortie (24) ;
un module de traitement (36) couplé au dispositif d'entrée (30) et au dispositif de sortie (24) ;
au moins un composant électronique supplémentaire (42, 44) connecté au module de traitement, le composant électronique supplémentaire étant une batterie, une unité de mémoire ou un modem ;
un plateau rigide (46, 48) supportant le composant électronique supplémentaire (42, 44) de manière à former un module rigide ; et
un boîtier (22) supportant le dispositif d'entrée, le dispositif de sortie, le module de traitement et le module rigide, le boîtier (22) comportant un élément de base (26) contenant au moins le module de traitement et le module rigide ;
l'élément de base (22) étant formé d'un matériau souple permettant à l'élément de base du boîtier, une fois assemblé pour supporter le module de traitement et le module rigide, de se plier sans déformation permanente.

2. Ordinateur portable selon la revendication 1, dans lequel l'élément de base (22) est formé d'un matériau élastomère.

3. Ordinateur portable selon la revendication 1 ou la revendication 2, dans lequel l'ordinateur portable est configuré sous la forme d'un ordinateur portatif, le dispositif d'entrée étant un clavier et le dispositif de sortie étant un afficheur.

4. Ordinateur portable selon l'une quelconque des revendications précédentes, dans lequel le module de traitement (36) comprend des cartes de circuits imprimés multiples (38) électroniquement raccordées ensemble par un ou plusieurs circuits souples (40).

5. Ordinateur portable selon l'une quelconque des revendications précédentes, dans lequel l'élément de base (26), une fois assemblé pour supporter le module de traitement (36), peut être plié de manière souple d'un angle de déviation supérieur à cinq degrés sans déformation permanente.
